# EUROPEAN PATENT APPLICATION

(11) **EP 1 988 444 A2**
(43) Date of publication of application: **05.11.2008**
(21) Application number: 08153772.2
(22) Date of filing: 31.03.2008
(51) Int. Cl.: G06F 3/023, G06F 3/048

(54) **Character input apparatus and method**

(30) Priority: 30.04.2007 KR 20070041970; 23.08.2007 KR 20070084999
(71) Applicant: Samsung Electronics Co., Ltd., Suwon-si, Gyeonggi-do 442-743 (KR)
(72) Inventor: Shin, Keun-Ho c/o Samsung Electronics Co., Ltd., Suwon-si Gyeonggi-do (KR); Won, Young-Min c/o Samsung Electronics Co., Ltd., Suwon-si Gyeonggi-do (KR); Han, Yuong-Seop c/o Samsung Electronics Co., Ltd., Suwon-si Gyeonggi-do (KR); Kim, Kee-Duck c/o Samsung Electronics Co., Ltd., Suwon-si Gyeonggi-do (KR); Lee, Kwang-Yong c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Provided is a character input method and apparatus. The character input method includes assigning character groups, each of which includes at least two characters, to at least two key regions generated by dividing a region of the touch screen and displaying the character groups in the corresponding key regions, based on one-to-one correspondence, if a press event occurs in one of the key regions, enlarging and displaying characters included in the key region where the press event occurs, determining whether one of a release event and a drag event occurs in one of the key regions where the characters are displayed enlarged, if it is determined that the drag event occurs, indicating the key region where the drag event occurs according to distance and direction of the drag event, and if the release event occurs in the indicated key region, outputting characters included in the indicated key region on the touch screen.. Thus, a user can easily find a desired character and accurately input the character, thereby performing key input more conveniently and quickly.

## Description

The present invention relates to a terminal having a touch screen, and in particular, to a character input apparatus and method.

Conventional terminals output a QWERTY keyboard or a keypad form in a touch screen, instead of having a keypad, in order to allow users to conveniently input characters. Examples of the terminals include an electronic note, a mobile communication terminal, and a Personal Digital Assistant (PDA).

With the recent trend of miniaturization of the terminals, the size of the touch screen also decreases. In this case, it is difficult for the terminal to output a whole keyboard onto the touch screen. Moreover, even if the whole keyboard is output in a reduced small form in the touch screen, the user experiences difficulty in accurately inputting desired characters due to the small keyboard. In other words, the user may mistakenly press a button located adjacent to a desired button and thus have to do the input operation again.

Those problems are caused by difficulty in the user's accurate input with a small keyboard displayed in a touch screen. Therefore, there is a need for a user interface of a new input type to solve the problems.

As such, the whole keyboard is difficult to output in the touch screen having a limited screen size. Furthermore, when the whole keyboard is output in a reduced form, the user cannot accurately do character input.

To address the above-discussed deficiencies of the prior art, it is a primary aspect of the present invention to address at least the above problems and/or disadvantages and to provide at least the advantages described below. Accordingly, the object of the present invention is to provide a character input apparatus and method, which allows fast character input while minimizing an error in touch input in a terminal having a touch screen.

This object is solved by the subject matter of the independent claims.

Preferred embodiments are defined in the dependent claims.

Another aspect of the present invention is to provide a character input apparatus and method, which allows a user to conveniently and fast input characters by efficiently displaying characters for a keyboard function onto a touch screen.

According to one aspect of the present invention, there is provided a character input method in a terminal having a touch screen. The character input method includes assigning character groups, each of which includes at least two characters, to at least two key regions generated by dividing a region of the touch screen and displaying the character groups in the corresponding key regions based on one-to-one correspondence, if a press event occurs in one of the key regions, enlarging and displaying characters included in the key region where the press event occurs, determining whether one of a release event and a drag event occurs in one of the key regions where the characters are displayed enlarged, if it is determined that the drag event occurs, indicating the key region where the drag event occurs according to distance and direction of the drag event, and if the release event occurs in the indicated key region, outputting characters included in the indicated key region on the touch screen.

According to another aspect of the present invention, there is provided a character input method in a terminal having a touch screen. The character input method includes assigning character groups, each of which includes at least two characters, to at least two first key regions generated by dividing a region of the touch screen and displaying the character groups in the corresponding first key regions based on one-to-one correspondence, if a press event occurs in one of the first key regions, enlarging and displaying characters included in the first key region where the press event occurs in second key regions, determining whether a release event occurs in the first key region if the press event occurs in one of the second key regions in a state where the press event occurs in the first key region, if it is determined that the release event occurs in the first key region, determining whether the release event occurs in the second key region where the press event occurs, and if it is determined that the release event occurs in the second key region, outputting a character included in the second key region onto the touch screen.

According to another aspect of the present invention, there is provided a character input method in a terminal having a touch screen. The character input method includes generating a plurality of key regions by dividing a region of the touch screen, assigning at least one character to each of the generated key regions and assigning functions for entering different specific character modes to at least one of the key regions, determining whether a request for entering one of the specific character modes is generated, and entering the specific character mode corresponding to the request and displaying items corresponding to the specific character mode according to a determination result.

According to another aspect of the present invention, there is provided a character input apparatus in a terminal having a touch screen. The character input apparatus includes a memory for storing character groups, each of which includes at least two characters displayed in each of at least two key regions generated by dividing a region of the touch screen, a touch screen for displaying the character group in each of the key regions and generating a press event, a release event, and a drag event according to user's input to the key regions, and a controller for assigning the character groups to the key regions and displaying the character groups in the corresponding key regions based on one-to-one correspondence, if a press event occurs in one of the key regions, enlarging and displaying characters included in the key region where the press event occurs, determining whether one of the release event and the drag event occurs in one of the key regions where the characters are displayed enlarged, indicating the key region where the drag event occurs according to distance and direction of the drag event if the drag event occurs, and outputting characters included in the indicated key region on the touch screen if the release event occurs in the indicated key region.

According to another aspect of the present invention, there is provided a character input apparatus in a terminal having a touch screen. The character input apparatus includes a memory for storing character groups, each of which includes at least two characters displayed in at least two first and second key regions generated by dividing a region of the touch screen, a touch screen for generating a press event, a release event, and a drag event according to user's input to the first and second key regions, and a controller for assigning character groups, each of which includes at least two characters, to the first key regions and displaying the character groups in the corresponding first key regions based on one-to-one correspondence, if a press event occurs in one of the first key regions, enlarging and displaying characters included in the first key region where the press event occurs in the second key regions, determining whether the release event occurs in the first key region if the press event occurs in one of the second key regions where the characters are displayed enlarged in a state where the press event occurs in the first key region, determining whether the release event occurs in the second key region where the press event occurs if the release event occurs in the first key region, and outputting a character included in the second key region onto the touch screen if the release event occurs in the second key region.

In the following, certain words and phrases are defined that are used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

For a more complete understanding of the present disclosure and its advantages, reference is now made to the following description taken in conjunction with the accompanying drawings, in which like reference numerals represent like parts:
FIGURE 1 is a block diagram illustrating an apparatus for inputting characters according to an exemplary embodiment of the present invention;
FIGURE 2 is a control flowchart illustrating a process in which characters are input from a user who inputs the characters with one finger according to a first exemplary embodiment of the present invention;
FIGURE 3 illustrates key regions displayed in a touch screen according to an exemplary embodiment of the present invention;
FIGURES 4A through 4C illustrate a process in which the user inputs characters with one finger according to the first exemplary embodiment of the present invention;
FIGURE 5 is a control flowchart illustrating a process in which characters are input from a user who inputs the characters with two fingers according to a second exemplary embodiment of the present invention;
FIGURES 6A through 6E illustrate a process in which the user inputs characters with two fingers according to the second exemplary embodiment of the present invention;
FIGURE 7 is a control flowchart illustrating a process in which characters are input by user's touch input according to a third exemplary embodiment of the present invention;
FIGURE 8 illustrates a process in which the user inputs characters by means of touch input according to the third exemplary embodiment of the present invention;
FIGURES 9A and 9B illustrate a process in which the user selects a character type according to an exemplary embodiment of the present invention;
FIGURES 10A through 10C illustrate a key region for each character type according to an exemplary embodiment of the present invention;
FIGURES 11A and 11B illustrate key arrangement for the process in which characters are input from the user who inputs the characters with one finger according to the first exemplary embodiment of the present invention;
FIGURES 12A and 12B illustrate key arrangement for the process in which characters are input from the user who inputs the characters with two fingers according to the second exemplary embodiment of the present invention;
FIGURES 13A and 13B illustrate key arrangement for a touch screen of a large screen size according to the second exemplary embodiment of the present invention;
FIGURES 14A and 14B illustrate a key region for each screen size of a touch screen according to an exemplary embodiment of the present invention;
FIGURES 15A through 15C illustrate a process for inputting characters in the middle row of key regions arranged in a 3x4 block form according to an exemplary embodiment of the present invention;
FIGURES 16A through 16C illustrate a process for inputting characters in the last row of the key regions arranged in the 3x4 block form according to an exemplary embodiment of the present invention;
FIGURE 17 illustrates key regions of a QWERTY type according to an exemplary embodiment of the present invention;
FIGURES 18A through 18C illustrate a process of inputting a character in key regions of a QWERTY type according to an exemplary embodiment of the present invention;
FIGURE 19 is a control flowchart for entering a specific character mode according to an exemplary embodiment of the present invention;
FIGURES 20A through 20C illustrate screens in a specific character mode according to an exemplary embodiment of the present invention;
FIGURE 21A illustrates key regions in which items for entering a specific character mode are displayed according to an exemplary embodiment of the present invention;
FIGURE 21B illustrates a process of selecting a mode selection item according to an exemplary embodiment of the present invention; and
FIGURES 22A through 22C illustrate groups of toggled mode items according to an exemplary embodiment of the present invention.

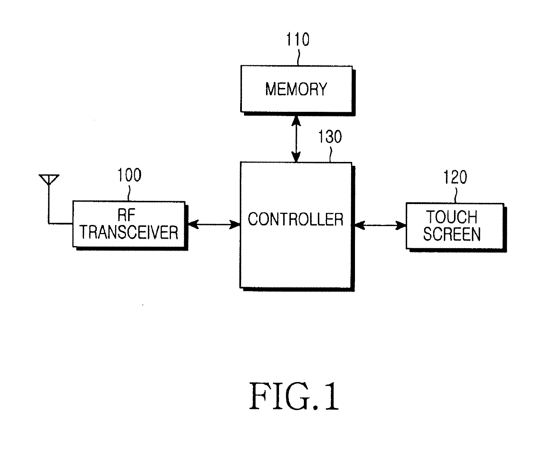

FIGURES 1 through 22C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged touch screen device.

The present invention suggests a character input apparatus and method. Thus, according to the present invention, in a terminal having a touch screen, character groups, each of which include at least two characters, are assigned to at least two key regions, which are generated by dividing the touch screen, and are displayed on the key regions. When a press event occurs in one of the key regions, characters included in the key region where the press event occurs are displayed enlarged. In addition, it is determined whether one of a release event and a drag event occurs in one of the key regions where the characters are displayed enlarged. If the drag event occurs, the key region is indicated according to distance and direction of the drag event. If the release event occurs in the indicated key region, a character included in the indicated key region is output onto the touch screen. Thus, the present invention provides fast and easy key input by allowing a user to easily search for a desired character and to accurately input the found character.

FIGURE 1 is a block diagram illustrating an apparatus for inputting characters according to an exemplary embodiment of the present invention.

Referring to FIGURE 1, the apparatus for inputting characters includes a radio frequency (RF) transceiver 100, a memory 110, a touch screen 120, and a controller 130. The RF transceiver 100 performs wireless communication of a mobile communication terminal. The memory 110 includes a read only memory (ROM) and a random access memory (RAM) for storing a plurality of programs and data. In particular, the memory 110 stores consonants and vowels of the Hangul, capital letters and small letters of the English alphabet, numbers, and special characters, which all will hereinafter be referred to as characters, displayed in key regions generated by dividing the touch screen 120 into at least two regions, which will hereinafter be referred to as key regions.

Upon touch of a character or a particular position in the touch screen 120 by a user's hand or an object, the touch screen 120 recognizes the touched position and performs a particular process using stored software. The touch screen 120 receives touch input from the user and displays display data under the control of the controller 130 or displays the operation state of a mobile communication terminal or information as icons and characters. In particular, the touch screen 120 according to the present invention displays key regions for inputting characters and generates a press event, a release event, and a drag event according to user input under the control of the controller 130.

The controller 130 assigns character groups, each of which includes at least two characters stored in the memory 110, to corresponding key regions output on the touch screen 120 and displays the character groups in the key regions based on one-to-one correspondence. The controller 130 outputs characters corresponding to a selected key region to the touch screen 120 according to the press event, the release event, and the drag event generated in the touch screen 120. Here, the press event occurs when one of the key regions is pressed, the release event occurs when the press of the key region is released, and the drag event occurs when user's drag input occurs on the key regions displayed on the touch screen 120.

According to an exemplary embodiment of the present invention, the controller 130 receives character input from the user in three ways. In other words, the controller 130 may receive character input from a user who inputs characters with one finger or a user who inputs characters with two fingers, or may receive character input by means of two touch inputs.

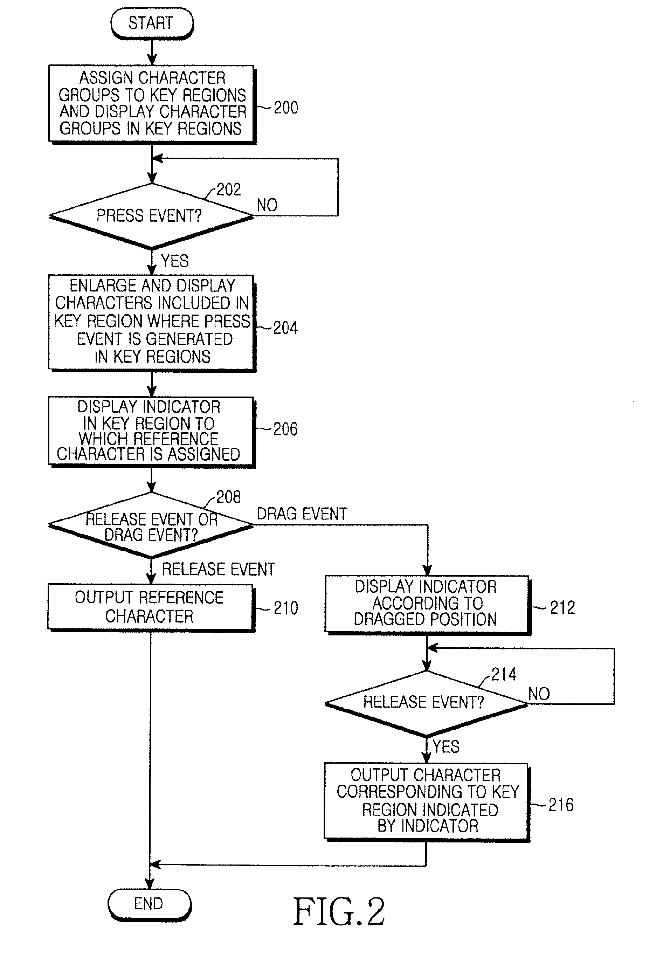

First, a way to receive character input from the user who inputs characters with one finger will be described with reference to FIGURE 2.

FIGURE 2 is a control flowchart illustrating a process in which characters are input from a user who inputs the characters with one finger according to a first exemplary embodiment of the present invention. Referring to FIGURE 2, the controller 130 assigns character groups to corresponding key regions output in the touch screen 120 and displays the character groups in the key regions based on one-to-one correspondence in step 200. At least two key regions may exist and the number of key regions can be adjusted for efficient user's character input according to the screen size of the touch screen 120. The number of character groups is subordinate to the number of key regions. More specifically, the number of character groups is the same as the number of key regions, and the number of characters constituting a character group decreases as the number of key regions increases. In an exemplary embodiment of the present invention, 8 key regions exist and a character group is composed of 4 characters, as will be described with reference to

### FIGURE 3.

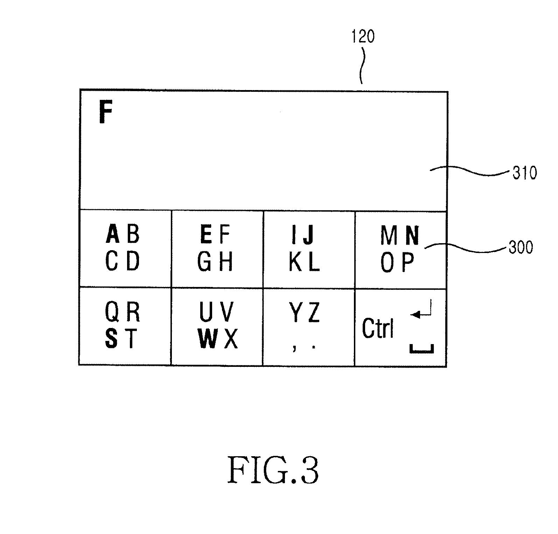

FIGURE 3 illustrates key regions displayed in the touch screen 120 according to an exemplary embodiment of the present invention. Referring to FIGURE 3, in the touch screen 120, character groups composed of English alphabet characters are sequentially assigned to and displayed in corresponding key regions. A display region 310 for displaying characters selected in the key regions is located above the key regions.

For example, in a key region 300, one of the characters displayed in the key region 300 is set to a reference character and is expressed with a different color than the other characters in the key region 300. According to an exemplary embodiment of the present invention, the reference character may also be expressed in a different form than the other characters, such as with a different font or a different thickness as well as a different color.

A reference character in a character group serves as a reference point when characters in the character group are displayed enlarged. In other words, if a press event occurs in a key region, the other characters except for a reference character are displayed enlarged relative to a key region to which the reference character is assigned in the same arrangement as a character group displayed in the key region where the press event occurs. Herein, the key region to which the reference character is assigned may correspond to a key region of a character group in which the press event occurs.

In an exemplary embodiment of the present invention, the operation mode of a key region is roughly divided into a whole character input mode and a separate character input mode. In the whole character input mode, character groups are assigned to and displayed in key regions as described with reference to FIGURE 3. If a press event occurs in one of the key regions displayed in the whole character input mode, the controller 130 switches to the separate character input mode. Thus, the controller 130 determines whether the press event occurs in one of the at least two key regions in step 202.

When the press event occurs in one of the key regions, the controller 130 enlarges and displays each of the characters included in the corresponding key region in each of the key regions in step 204 in order to switch to the separate character input mode. The key regions where the characters are displayed enlarged may be the same as those in the whole character input mode. Thus, in this case, upon switching from the whole character input mode to the separate character input mode, the character groups that have been displayed in the whole character input mode all disappear. The characters included in the key region where the press event occurs may be displayed enlarged in at least two key regions of a pop-up window type or various changes may be made thereto according to an exemplary embodiment of the present invention.

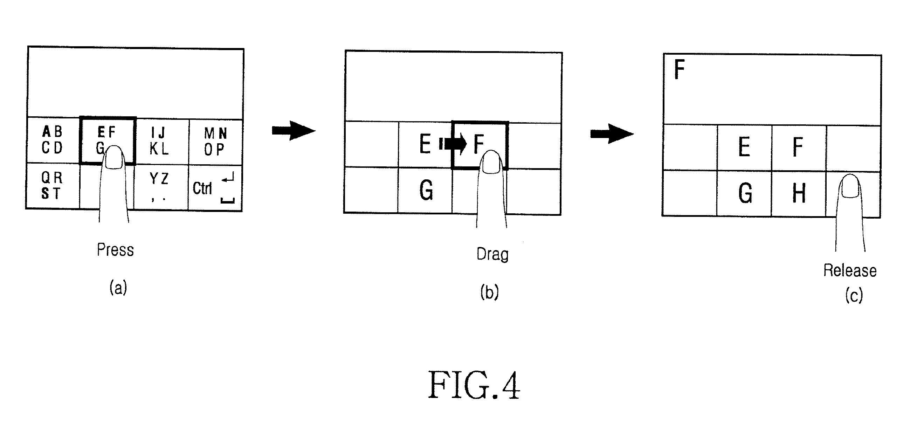

Once the characters are displayed enlarged as mentioned above, the controller 130 goes to step 206 in order to display an indicator in a key region to which a reference character is assigned. The indicator may apply a visual effect to a selected key region in order to allow a user to recognize the selected key region. According to an exemplary embodiment of the present invention, the controller 130 uses an indicator for changing the color of edges of a selected key region or shading in the selected key region in order to allow the user to recognize the selected key region, and a detailed description thereof will be described with reference to FIGURES 4A through 4C which illustrates a process in which the user inputs characters with one finger according to the first exemplary embodiment of the present invention.

In FIGURES 4A through 4C, the user inputs an English alphabet character 'F'. As illustrated in FIGURE 4A, the user presses a key region 'EFGH' including 'F' in the whole character input mode in which key regions including character groups are displayed. As a press event occurs in the pressed key region, an indicator for changing the color of the edges of the pressed key region is displayed. The position of the indicator can be changed according to a drag event generated by user's drag input in the first exemplary embodiment of the present invention. Thus, the user can easily recognize the pressed key region through the indicator.

If the press event occurs in the key region as illustrated in FIGURE 4A, the controller 130 switches to the separate character input mode. In the separate character input mode, the controller 130 enlarges and displays characters in the key region where the press event occurs as illustrated in FIGURE 4B. The characters that are displayed enlarged are displayed relative to a reference character 'E' in the same arrangement as displayed in the key region in the whole character input mode. The reference character 'E' is a character assigned to the key region where the press event occurs and can be output by one touch. In the first exemplary embodiment of the present invention, considering that the user inputs characters with one finger, the controller 130 displays the enlarged characters close to one another in order to minimize the distance of drag. Thus, the user can easily select a desired character with less effort.

Once characters are displayed enlarged, the controller 130 determines whether a release event or a drag event occurs in step 208. In step 210, the controller 130 outputs a reference character if the release event occurs. Referring to FIGURES 4A through 4C, the controller 130 outputs the reference character 'E' by user's one touch of the key region including the character group as illustrated in FIGURE 4A. This is because the reference character 'E' is assigned to a key region where the release event occurs. Thus, the user can input the reference character by one touch in the whole character input mode.

If the drag event occurs, the controller 130 displays an indicator in the dragged position in step 212. As illustrated in FIGURE 4B, the controller 130 can receive a user's drag input in a state where a key region is pressed by the user. The controller 130 changes the position of the indicator for indicating a key region pressed according to the drag event. In the first exemplary embodiment of the present invention, the user generates the drag event from the key region of 'E' to a key region of 'F' and the position of the indicator is also changed accordingly.

The controller 130 then determines whether the release event occurs in step 214. If so, the controller 130 outputs characters corresponding to a key region indicated by the indicator in step 216. In the first exemplary embodiment of the present invention, if the release event occurs in the 'F'-displayed key region selected by the user's drag input, the controller 130 outputs 'F' in the display region as illustrated in FIGURE 4C. The controller 130 then switches to the whole character input mode, thereby allowing the user to input other characters.

In the first exemplary embodiment of the present invention, since the user inputs a character by generating the press event and the release event with one finger, a character corresponding to a key region where the release event occurs is output. Characters displayed enlarged are displayed as close as possible to one another, thereby enabling the user to select a desired character by minimum-distance drag. The user thus can easily and rapidly input characters with less effort.

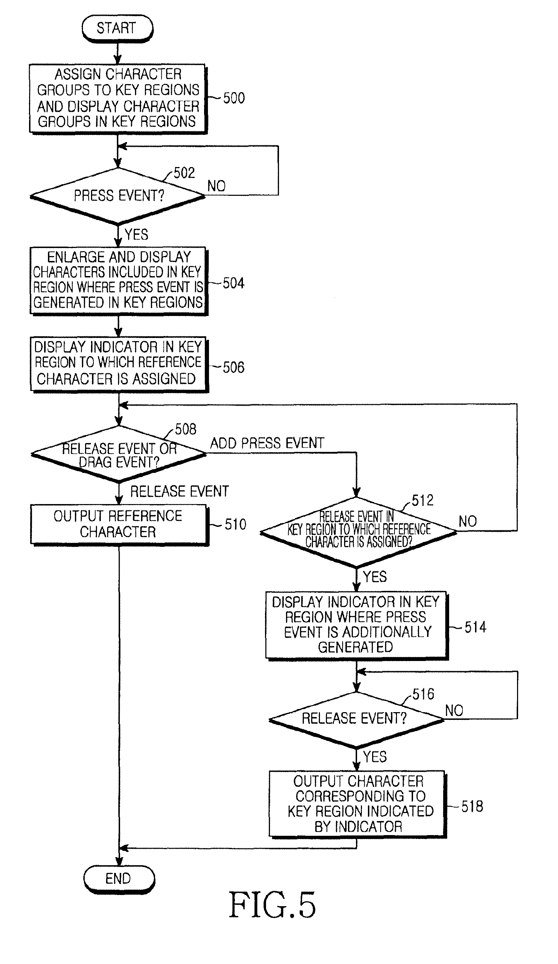

A user may input characters with two fingers. FIGURE 5 is a control flowchart illustrating a process in which characters are input from the user who inputs the characters with two fingers according to a second exemplary embodiment of the present invention.

Referring to FIGURE 5, the controller 130 assigns character groups to corresponding key regions and displays the character groups in the key regions based on one-to-one correspondence in step 500. The controller 130 then enters the whole character input mode. The key regions are displayed in the touch screen 120 in the same manner as in FIGURES 4A through 4C and thus a description thereof will not be provided.

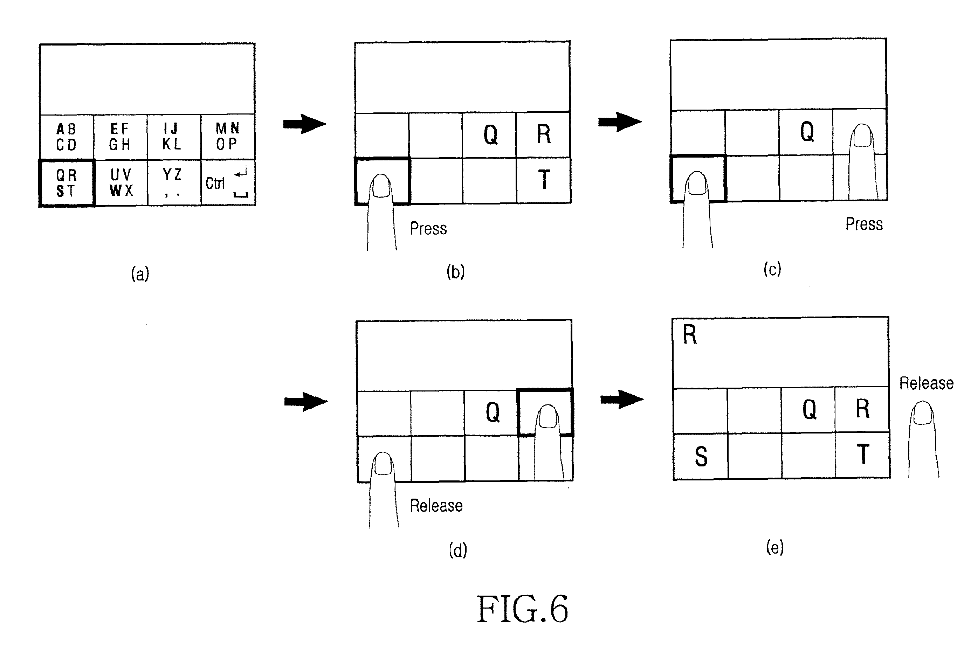

The controller 130 determines whether a press event occurs in one of the key regions in step 502. If the press event occurs in a key region, the controller 130 enlarges and displays characters included in the key region in corresponding key regions in step 504 in order to switch to the separate character input mode, as will be described in detail with reference to FIGURES 6A through 6E.

FIGURES 6A through 6E illustrate a process in which the user inputs characters with two fingers according to the second exemplary embodiment of the present invention. In the whole character input mode as illustrated in FIGURE 6A, in order to input 'R', the user presses a key region 'QRST' including 'R'. A press event is then generated in the key region 'QRST' and characters included the key region 'QRST' are displayed enlarged in the touch screen 120 as illustrated in FIGURE 6B. At this time, the characters are displayed in corresponding key regions in a different manner than in the first exemplary embodiment of the present invention. In other words, in the second exemplary embodiment of the present invention, considering that the user inputs characters with different two fingers, the controller 130 arranges the characters in consideration of the positions of user's both hands. In the second exemplary embodiment of the present invention, a character is not selected by drag input and thus it is not necessary to arrange characters in proximity to one another unlike when the user inputs characters with one finger.

After displaying the enlarged characters and switching to the separate character input mode, the controller 130 displays an indicator in a key region to which a reference character is assigned in step 506. The reference character in the second exemplary embodiment of the present invention has the same meaning as that of the reference character in the first exemplary embodiment of the present invention. In other words, the reference character can be output in the display region by one touch like in the first exemplary embodiment of the present invention. Thus, the controller 130 determines whether the release event or the press event occurs in step 508. If the release event occurs, the controller 130 outputs the reference character in step 510.

If the press event occurs (i.e., if a press event occurs in a key region where another press event has already been generated), the controller 130 determines whether the release event occurs in the key region to which the reference character is assigned in step 512. Referring to FIGURE 6C, the user presses a key region in which a desired character 'R' is displayed with a finger while pressing the key region to which the reference character is assigned with the other finger. At this time, the indicator remains in the key region to which the reference character is assigned.

If the release event occurs in the key region to which the reference character is assigned, the controller 130 displays the indicator in the key region where the press event occurs in step 514. In other words, as illustrated in FIGURE 6D, if the user removes the finger from a key region where a reference character 'S' is displayed, an indicator moves to a key region where a character 'R' pressed by the other finger is displayed.

The controller 130 then determines whether the release event occurs in the key region indicated by the indicator in step 516. If so, the controller 130 outputs a corresponding character in the key region indicated by the indicator in step 518. When the release event occurs in the key region where 'R' is displayed as in FIGURE 6D, 'R' is output in the display region as in FIGURE 6E. In other words, the user generates the release event in the key region where the reference character is displayed, and generates the release event in the key region where a desired character is displayed with the other finger, thereby outputting a desired character. The controller 130 switches back to the whole character input mode in order to additionally receive character input from the user.

When using two fingers, the user can input characters more quickly. Moreover, characters in key regions are displayed different according to the whole character input mode and the separate character input mode, thereby allowing the user to accurately select a desired character.

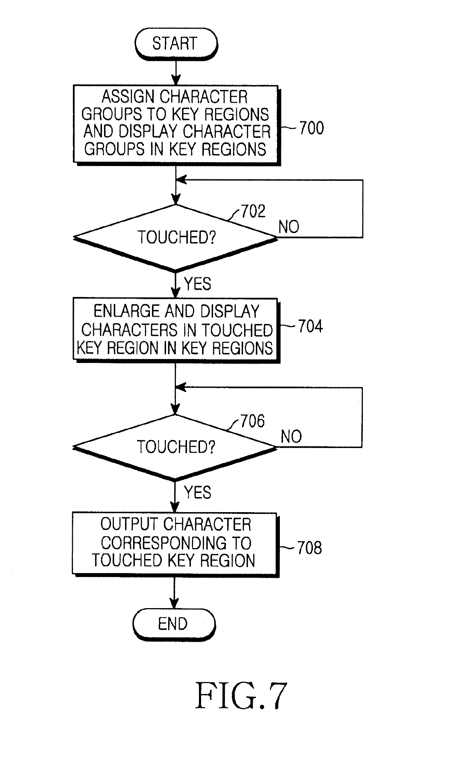

Unlike the foregoing embodiments, the user may also input a character by two touch inputs. In the current embodiment of the present invention, touch input means that the release event occurs immediately after the press event occurs. FIGURE 7 is a control flowchart illustrating a process in which characters are input by user's touch input according to a third exemplary embodiment of the present invention.

Referring to FIGURE 7, the controller 130 assigns character groups to corresponding key regions and displays the character groups in the key regions based on one-to-one correspondence in step 700. In this whole character input mode, the controller 130 determines whether one of the displayed key regions is touched in step 702. If so, the controller 130 enlarges and displays characters included in the touched key region in corresponding key regions in step 704. If not, the controller 130 goes back to previous step.

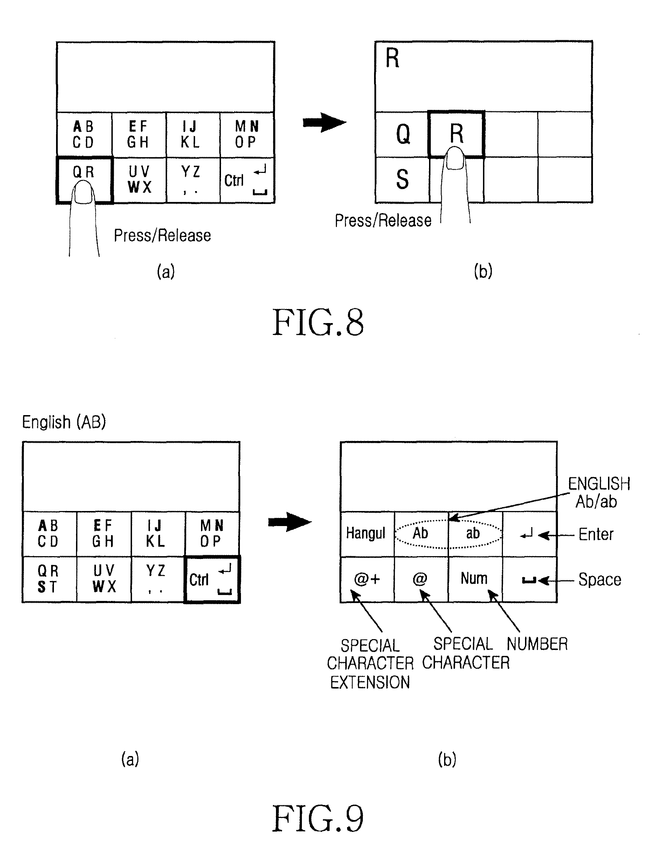

In the third exemplary embodiment of the present invention, unlike in the foregoing embodiments, the controller 130 switches from the whole character input mode to the separate character input mode according to occurrence of the release event immediately after occurrence of the press event, i.e., according to touch input. Thus, the controller 130 determines whether one of the key regions in which the characters are displayed enlarged is touched in step 706. If so, the controller 130 outputs characters corresponding to the touched key region in step 708, and if not, the controller 130 goes back to previous step, as will be described in more detail with reference to FIGURE 8.

FIGURE 8 illustrates a process in which the user inputs characters by means of touch input according to the third exemplary embodiment of the present invention. Referring to FIGURE 8, the user touches a key region including a desired character 'R' from among key regions displayed in the whole character input mode as illustrated in FIGURE 8A. Characters 'QTRS' included in the touched key region are displayed enlarged as illustrated in FIGURE 8B. At this time, the enlarged displayed characters are displayed in the same arrangement as in the touched key region of the whole character input mode. In the separate character input mode, the controller 130 determines whether one of the key regions corresponding to the enlarged displayed characters is touched. If so, the controller 130 outputs a character corresponding to the touched key region in the display region and switches back to the whole character input mode. In this process, whenever a key region is touched, the controller 130 displays an indicator in the touched key region, thereby allowing the user to recognize the selected key region.

As such, in the third exemplary embodiment of the present invention, the user can input a character by two touch inputs, thereby more intuitively performing key input.

As mentioned above, the present invention provides three methods of inputting a character. Thus, the user can input a character using one of the three character input methods. Such methods can improve input speed and reduce an error in key input when compared to conventional character input methods. In addition, according to the present invention, icons indicating menu items, instead of characters, may be displayed in key regions and one of the menu items may be selected using one of the foregoing three character input methods. In this case, the controller 130 executes an application according to the selected menu item. The present invention can be utilized in various fields requiring key input such as for menu selection and mode switching as well as character input.

According to an exemplary embodiment of the present invention, the user can select the type of characters displayed in key regions. FIGURES 9A and 9B illustrate a process in which the user selects a character type according to an exemplary embodiment of the present invention.

A key region indicated by an indicator, which will hereinafter be referred to as a control key, as illustrated in FIGURE 9A is an option key. When the control key is selected, key regions for selecting a character type are displayed as illustrated in FIGURE 9B. The user can then select a key region using one of the foregoing three character input methods.

Referring to FIGURE 9B, the Hangul and capital letters and small letters of the English alphabet are displayed in upper key regions and special character extensions, special characters, and numbers are displayed in lower key regions. An enter key and a space key illustrated in FIGURE 9B are used for confirmation and spacing, respectively. According to an exemplary embodiment of the present invention, the user can acquire the same result as the result of touch of the space key by touching the control key illustrated in FIGURE 9A.

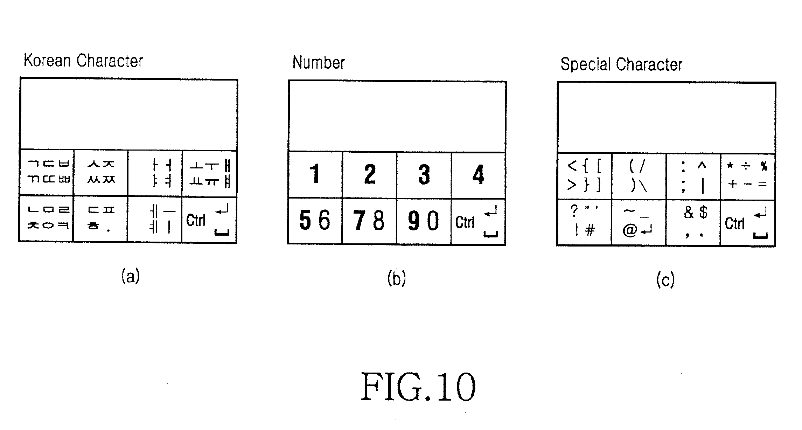

By selecting one of the key regions illustrated in FIGURE 9B, the user can change the type of characters displayed in key regions. Key regions can be displayed according to character types as illustrated in FIGURE 10.

FIGURES 10A through 10C illustrate a key region for each character type according to an exemplary embodiment of the present invention. If a key region 'Hangul' is selected from among the key regions illustrated in FIGURE 9B, consonants and vowels of the Hangul are displayed in key regions as illustrated in FIGURE 10A. If a key region 'Num' is selected, numbers are displayed in the key regions as illustrated in FIGURE 10B. If a key region '@' is selected, special characters are displayed in the key regions as illustrated in FIGURE 10C.

In the whole character input mode, characters displayed in key regions are arranged differently according to their types as illustrated in FIGURES 9A and 9B and FIGURES 10A through 10C. For example, 4 characters are assigned to each key region for the English alphabet, but such a structure changes for the Hangul. In other words, since the number of consonants and vowels of the Hangul is greater than that of the English alphabet, the number of characters displayed in each key region for the Hangul is greater than in the English alphabet.

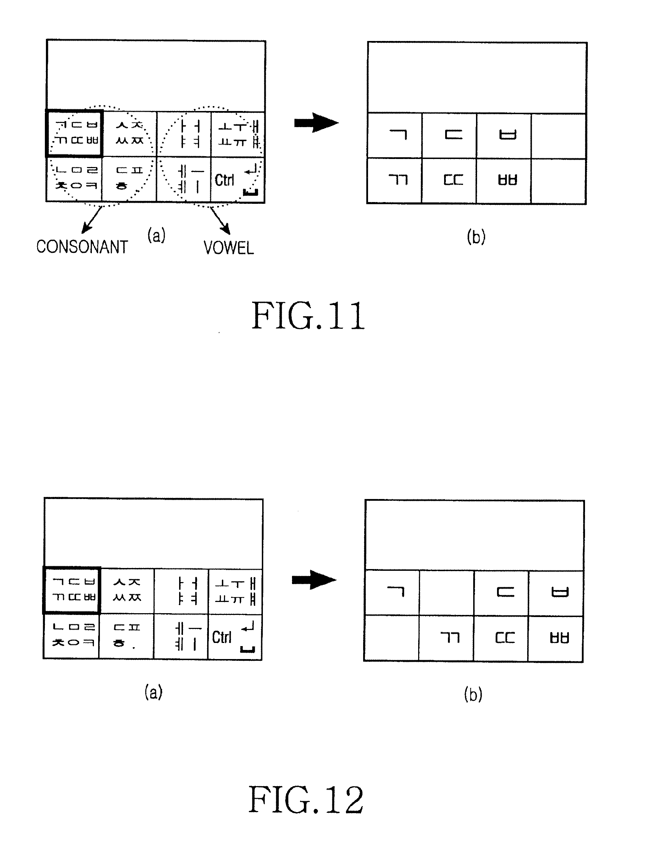

In the separate character input mode, characters displayed in key regions are arranged differently according to whether the user uses one finger or two fingers. FIGURES 11A and 11B illustrate key arrangement for the process in which characters are input from the user who inputs the characters with one finger according to the first exemplary embodiment of the present invention.

As illustrated in FIGURE 11A, for the Hangul, consonants and vowels are assigned to and displayed in a left portion and a right portion of the entire key regions, respectively. Since the number of consonants and vowels of the Hangul is greater than in the English alphabet, the number of characters displayed in one key region may be increased when compared to a case with the English alphabet. In the key regions displayed as illustrated in FIGURE 11A, the user can input a character with one finger. Thus, the user can select a desired character by dragging a key region with one finger. To this end, the controller 130 arranges characters in proximity to one another as illustrated in FIGURE 11B, thereby allowing the user to more easily select a character by drag.

The user may also input a character with two fingers according to the second exemplary embodiment of the present invention, as will be described in detail with reference to FIGURES 12A and 12B.

FIGURES 12A and 12B illustrate key arrangement for the process in which characters are input from the user who inputs the characters with two fingers according to the second exemplary embodiment of the present invention. As illustrated in FIGURE 12A, key regions are initially displayed in the same manner as those in FIGURE 11A. The user first generates the press event in one of the key regions with one finger. Characters included in the corresponding key region are then displayed enlarged as illustrated in FIGURE 12B. A reference character '¬' is displayed in the key region where the press event occurs, and the other characters are arranged in an opposite side to the key region where the press event occurs. The user may additionally generate the press event in another key region using the other finger in order to input a character other than the reference character. The controller 130 then considers that the user additionally generates the press event using a finger of the other hand. Thus, the reference character and the other characters are displayed in opposite sides to each other in the touch screen 120. Such arrangement enables the user to conveniently input a character.

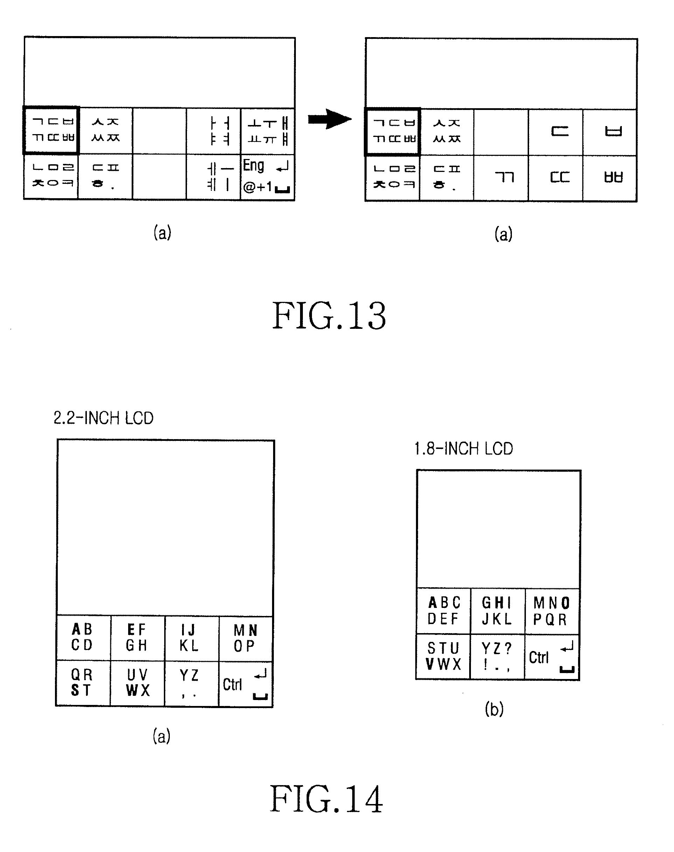

In an exemplary embodiment of the present invention, key regions arranged in a 2x4 block form are displayed in the touch screen 120. However, the arranged form of the key regions may vary with the size of the touch screen 120 and the arrangement of characters in the key regions may also change accordingly. FIGURES 13A and 13B illustrate key arrangement for a touch screen of a large screen size according to the second exemplary embodiment of the present invention.

Referring to FIGURES 13A and 13B, for the touch screen 120 of a large screen size, the number of displayed key regions may increase. In FIGURE 13A, key regions are displayed in a 2x5 block form according to the size of the touch screen 120. If the press event occurs in one of consonant key regions displayed in a left portion, vowel key regions displayed in a right portion disappear and consonants are displayed enlarged as illustrated in FIGURE 13B. In other words, key regions including consonant groups are displayed in the left portion and the consonants corresponding to the key region where the press event occurs are displayed enlarged in the right portion. At this time, a key region corresponding to the reference character '¬' is not displayed because the key region where the press event occurs is regarded as a key region to which the reference character is assigned. Thus, the reference character can be output merely by one touch.

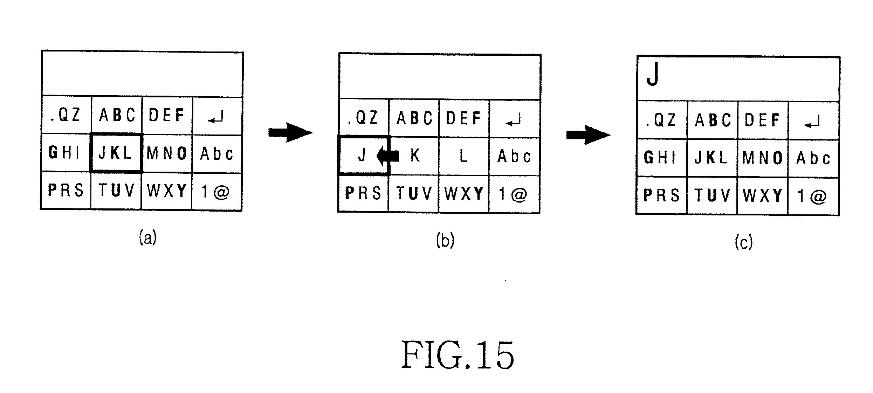

As such, the number of key regions can be adjusted according to the screen size of the touch screen 120. FIGURES 14A and 14B illustrate a key region for each screen size of the touch screen 120 according to an exemplary embodiment of the present invention. Four (4) characters are assigned to each of eight (8) key regions in the vertical touch screen 120 having a 2.2-inch screen as illustrated in FIGURE 14A, and six (6) characters are assigned to each of 6 key regions in the vertical touch screen 120 having a 1.8-inch screen as illustrated in FIGURE 14B, thereby allowing the user to accurately input a character regardless of the screen size of the touch screen 120. By changing the number of key regions flexibly according to the screen size of the touch screen 120, the user can utilize the present invention for various applications. Thus, the three character input methods according to the present invention can also be applied to key regions arranged in a 3x4 block form in the touch screen 120, as will be described in detail with reference to FIGURES 15A through 15C.

FIGURES 15A through 15C illustrate a process for inputting characters in the middle row of key regions arranged in a 3x4 block form according to an exemplary embodiment of the present invention. Referring to FIGURES 15A through 15C, the user selects a key region including a desired character from among key regions displaying character groups using one of the three character-input methods.

In order to input 'J' in the middle row of the key regions as illustrated in FIGURE 15A, the user first selects a key region'JKL' induding'J'. The display is then changed such that character groups in the middle row where 'JKL' is included disappears and 'J', 'K', and 'L' are assigned to and displayed enlarged in key regions of the middle row, respectively as illustrated in FIGURE 15B. At this time, an indicator is displayed in a reference character by default and then moved to a key region selected by the user. Thus, if the release event occurs, the character 'J' indicated by the indicator is output in the display region as illustrated in FIGURE 15C.

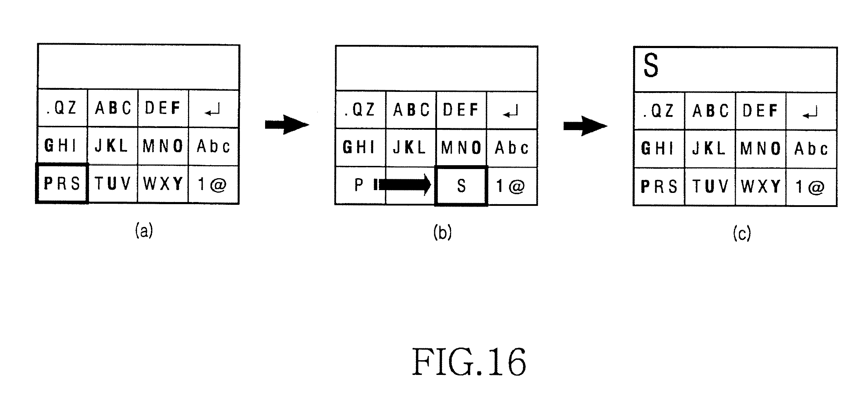

FIGURES 16A through 16C illustrate a process for inputting characters in the last row of the key regions arranged in a 3x4 block form according to an exemplary embodiment of the present invention. In order to input 'S' in the last row, the user can select'S' in the same manner as in FIGURES 15A through 15C.

The user selects a key region 'PRS' including 'S' in the last row as illustrated in FIGURE 16A. Character groups in the last row where 'PRS' is included disappears and 'P', 'R', and 'S' are assigned to and displayed enlarged in key regions of the last row, respectively as illustrated in FIGURE 16B. If the user selects a key region corresponding to 'S', 'S' is output in the display region as illustrated in FIGURE 16C.

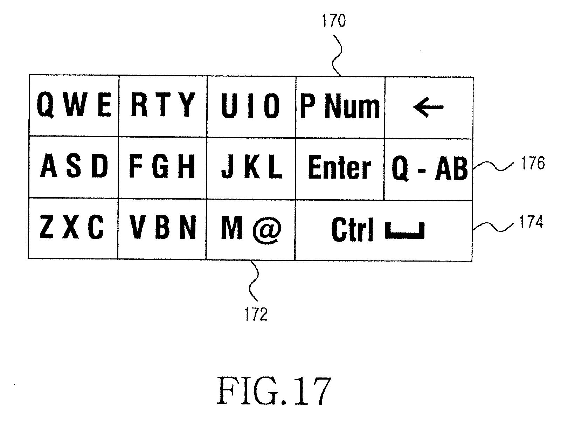

According to an exemplary embodiment of the present invention, the user may also use the character input method in another form when characters are displayed in key regions of a QWERTY type. FIGURE 17 illustrates key regions of a QWERTY type according to an exemplary embodiment of the present invention.

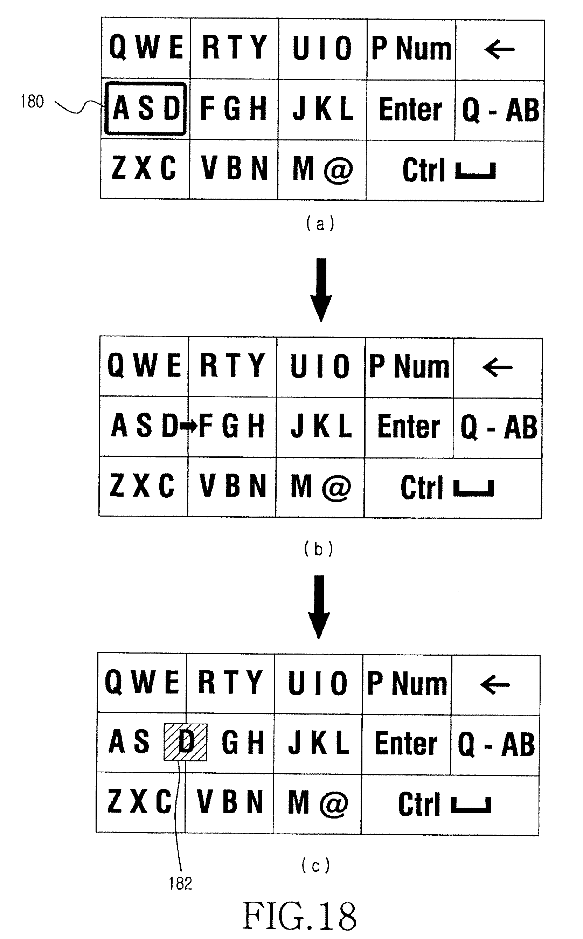

As illustrated in FIGURE 17, characters are displayed in key regions according to a QWERTY type that is arrangement of a computer keyboard. The user may generate the press event in a key region 180 including a desired character as illustrated in FIGURE 18A according to an exemplary embodiment of the present invention. In order to input 'D', the user generates the drag event in a direction from 'S' located in the center of the key region 180 towards 'D'. Then, 'D' corresponding to the checked direction is displayed onto a pop-up window 182 as illustrated in FIGURE 18C. The user recognizes the displayed character corresponding to the drag event through the pop-up window and then generates the release event, thereby accurately inputting the desired character. As such, a way to input a character by generating the drag event in a direction towards the character can save character input time by facilitating character input.

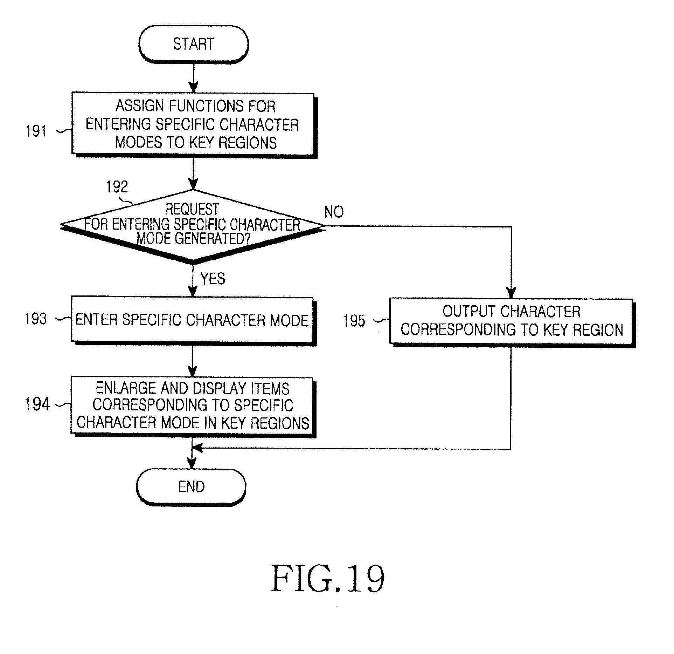

According to an exemplary embodiment of the present invention, functions for entering different specific character modes are assigned to at least one key region 170, 172, and 174 from among the key regions of the QWERTY type illustrated in FIGURE 17. The different specific character modes may include at least two of a number input mode, an English character input mode, a Korean character input mode, a special character input mode, and a mode, which will hereinafter be referred to as an edition mode, that provides edition items for editing an input character. FIGURE 19 is a control flowchart for entering a specific character mode according to an exemplary embodiment of the present invention.

Referring to FIGURE 19, the controller 130 assigns functions for entering specific character modes to key regions in step 191. According to an exemplary embodiment of the present invention, as illustrated in FIGURE 17, a function for entering the number input mode is assigned to the key region 170 where the character 'P' is displayed, a function for entering the special character input mode is assigned to the key region 172 where the character 'M' is displayed, and a function for entering the edition mode is assigned to the key region 174 to which a spacing function is assigned.

In step 192, the controller 130 determines whether a request for entering a specific character mode is generated. According to an exemplary embodiment of the present invention, the controller 130 measures the duration time of the press event in a key region to which a function for entering the specific character mode is assigned in order to determine whether the request is generated. The controller 130 determines whether the request is generated by comparing the duration time of the press event with predetermined threshold time. If it is determined that the request is generated, the controller 130 enters the specific character mode in step 193. The controller 130 assigns items corresponding to the specific character mode to key regions and displays the items in the key regions in step 194. On the other hand, if it is determined that the request is not generated, the controller 130 outputs a character corresponding to the key region in step 195.

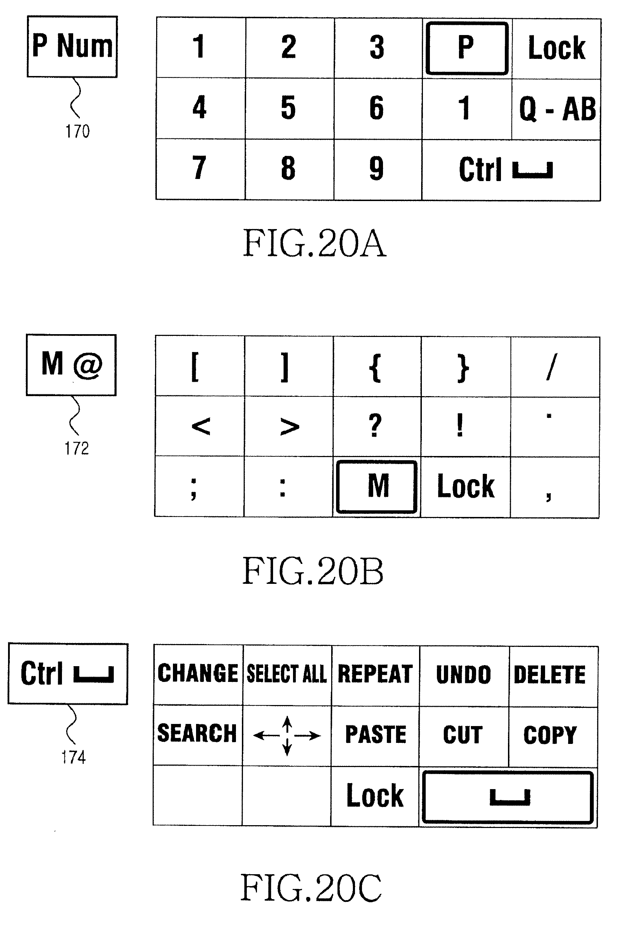

For example, when the press event occurs in the key region 170 to which the character 'P' and the function for entering the number input mode are assigned in FIGURE 17, the controller 130 measures the duration time of the press event. When the duration time of the press event is less than the predetermined threshold time, the controller 130 determines that the request for entering the number input mode is not generated and outputs the character 'P'. When the duration time of the press event is greater than the predetermined threshold time, the controller 130 determines that the request is generated and enters the number input mode. Thus, the controller 130 assigns numbers to key regions and displays the numbers in the key regions as illustrated in FIGURE 20A.

Similarly, the controller 130 measures the duration time of the press event in the key region 172 to which the character 'M' and the function for entering the special character input mode are assigned and outputs the character 'M' or enters the special character input mode as illustrated in FIGURE 20B.

When the duration time of the press event in the key region 174 to which the spacing function and the function for entering the edition mode are assigned is less than the predetermined threshold time, the controller 130 performs the spacing function. On the other hand, when the duration time of the press event is greater than the predetermined threshold time, the controller 130 determines that the request for entering the edition mode is generated and displays a plurality of edition items in key regions as illustrated in FIGURE 20C. The user can then select one of the displayed edition items using the drag event and the release event.

As such, the controller 130 measures the duration time of the press event in order to determine whether a request for entering a specific character mode is generated. However, a criterion for the determination may vary according to an exemplary embodiment of the present invention. While characters or edition items corresponding to a specific character mode are displayed in place of characters in key regions where the characters have been displayed an exemplary embodiment of the present invention, they may also be displayed in various ways such as in a pop-up window.

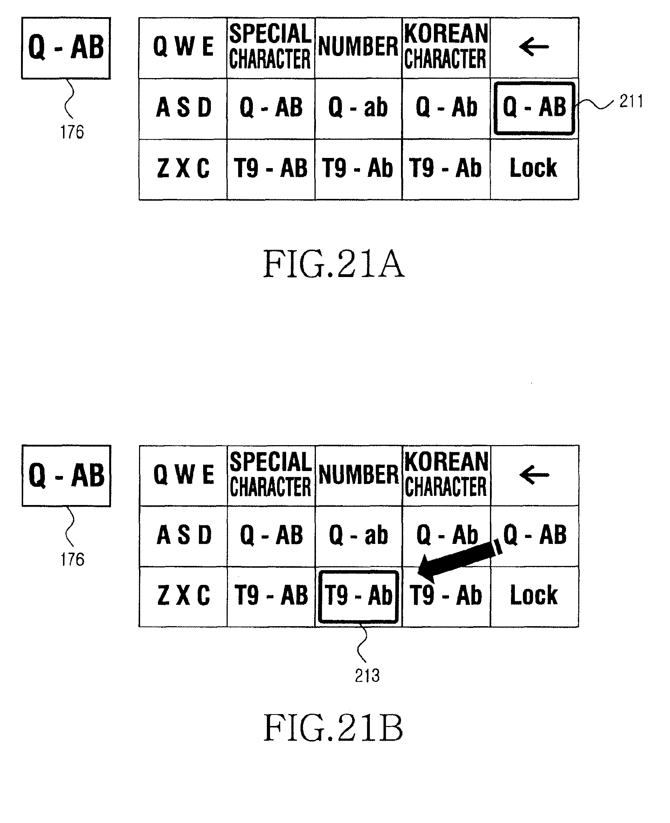

In the foregoing embodiment of the present invention, the user selects a key region to which a specific character mode is assigned in order to enter the specific character mode. On the other hand, the user may enter various specific character modes by selecting a mode selection key region 176 illustrated in FIGURE 17. More specifically, in order to enter a specific character mode, the user generates the press event in the mode selection key region 176. Thus, items for entering the specific character mode, which hereinafter will be referred to as mode items, are displayed in place of characters in key regions where the characters have been displayed as illustrated in FIGURE 21A. The user then indicates a desired mode item 213 by generating the drag event as illustrated in FIGURE 21B and generates the release event in a key region corresponding to the indicated mode item 213, thereby using characters provided in the specific character mode.

According to an exemplary embodiment of the present invention, the mode items may be a character input mode, an English character input mode, a Korean character input mode, and a special character input mode. The mode items may also be a capital letter input mode, a small letter input mode, a capital/small letter input mode, and a T9 input mode in which a word predicted according to an input character is output. Thus, the user can easily input a character with various types of characters or edition items.

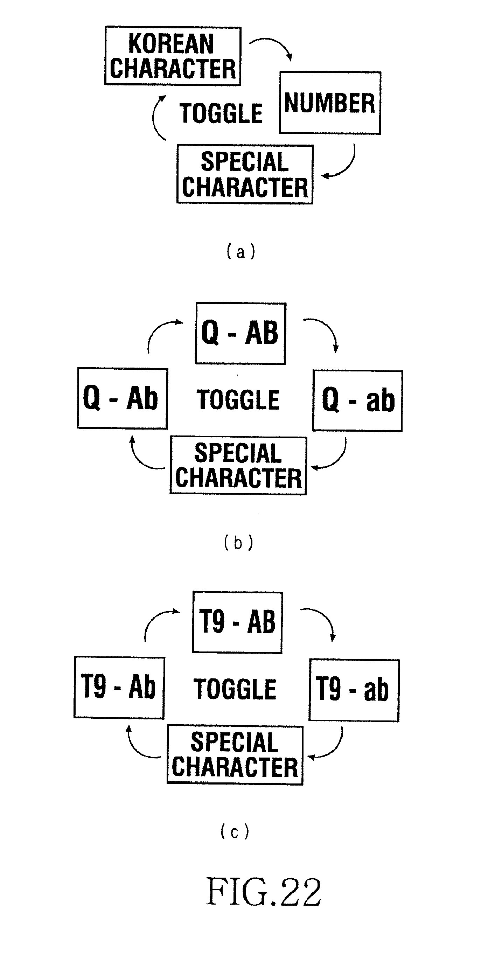

The mode items may also be displayed by being toggled in key regions according to an exemplary embodiment of the present invention. More specifically, the controller 130 divides the mode items on a group basis and selectively displays mode items included in a corresponding group. The groups for the mode items may be a group including the Korean character input mode, the number input mode, and the special character input mode as illustrated in FIGURE 22A, a group including the capital letter input mode (Q-AB), the small letter input mode (Q-ab), a capital/small letter input mode (Q-Ab), and the special character input mode as illustrated in FIGURE 22B, and a group including the capital letter input mode (T9-AB), the small letter input mode (T9-ab), a capital/small letter input mode (T9-Ab), and the special character input mode according to a T9 method as illustrated in FIGURE 23C. Each of the groups including the plurality of mode items may be displayed in various ways, e.g., in a pop-up window or in a corresponding key region as illustrated in FIGURE 21A.

As is apparent from the foregoing description, the present invention allows key input to a touch screen to be performed more conveniently and fast. Thus, the user can easily find a desired character and accurately input the character. Moreover, the present invention can also be used in various input devices of portable terminals such as mobile communication terminals, Personal Digital Assistants (PDA), and the like, thereby facilitating the use of a user input interface displaying menu icons as well as characters.

Although the present disclosure has been described with an exemplary embodiment, various changes and modifications may be suggested to one skilled in the art. It is intended that the present disclosure encompass such changes and modifications as fall within the scope of the appended claims.

## Claims

1. A character input method for use in a terminal having a touch screen, the character input method comprising:
assigning character groups, each of which includes at least two characters, to at least two key regions generated by dividing a region of the touch screen and displaying the character groups in the corresponding key regions, based on one-to-one correspondence;
if a press event occurs in one of the key regions, enlarging and displaying characters included in the key region where the press event occurs;
determining whether one of a release event and a drag event occurs in one of the key regions where the characters are displayed enlarged;
if it is determined that the drag event occurs, indicating the key region where the drag event occurs according to distance and direction of the drag event; and
if the release event occurs in the indicated key region, outputting characters included in the indicated key region on the touch screen.

2. The character input method of claim 1, wherein the enlarging and displaying of the characters comprises enlarging and displaying the characters included in the key region where the press event occurs, instead of the character groups, in the key regions to which the character groups are assigned.

3. The character input method of claim 1, wherein the enlarging and displaying of the characters comprises enlarging and displaying the characters included in the key region where the press event occurs in at least two key regions of a pop-up window type.

4. The character input method of one of claims 1 to 3, wherein the key regions are in a block form.

5. The character input method of claim 4, wherein the block form is one of 2x4, 4x2, 3x4, and 4x3 arrangements.

6. The character input method of one of claims 1 to 5, wherein the character groups are icons indicating menu items.

7. The character input method of one of claims 1 to 6, further comprising, if it is determined that the release event occurs after occurrence of the press event, displaying a reference character included in the key region where the release event occurs on the touch screen.

8. The character input method of claim 7, wherein the reference character is displayed with a different color than those of the other characters in the key region to which the corresponding character group is assigned.

9. The character input method of one of claims 1 to 8, wherein the indicating of the key region comprises displaying an indicator moved according to the drag event in the key region where an indicated character is displayed.

10. The character input method of claim 1, wherein the enlarging and displaying of the characters comprises:
determining whether the release event occurs in a state where the press event occurs; and
if it is determined that the release event occurs, enlarging and displaying characters included in the key region where the press event occurs.

11. The character input method of claim 10, further comprising:
determining whether the press event occurs in a particular key region among key regions where the characters are displayed enlarged; and
if the release event occurs in a state where the press event occurs, displaying a character included in the particular key region on the touch screen.

12. A character input method for use in a terminal having a touch screen, the character input method comprising:
assigning character groups, each of which includes at least two characters, to at least two first key regions generated by dividing a region of the touch screen and displaying the character groups in the corresponding first key regions, based on one-to-one correspondence;
if a press event occurs in one of the first key regions, enlarging and displaying characters included in the first key region where the press event occurs in second key regions;
determining whether a release event occurs in the first key region if the press event occurs in one of the second key regions in a state where the press event occurs in the first key region;
if it is determined that the release event occurs in the first key region, determining whether the release event occurs in the second key region where the press event occurs; and
if it is determined that the release event occurs in the second key region, outputting a character included in the second key region onto the touch screen.

13. The character input method of claim 12, wherein the enlarging and displaying of the characters comprises enlarging and displaying the characters included in the second key region where the press event occurs, instead of the character groups, in the first key regions to which the character groups are assigned.

14. The character input method of claim 12, wherein the enlarging and displaying of the characters comprises enlarging and displaying the characters included in the first key region where the press event occurs in at least two second key regions of a pop-up window type.

15. The character input method of one of claims 12 to 14, wherein the first and second key regions are in a block form.

16. The character input method of claim 15, wherein the block form is one of 2x4, 4x2, 3x4, and 4x3 arrangements.

17. The character input method of one of claims 12 to 16, wherein the character groups are icons indicating menu items.

18. The character input method of one of claims 12 to 17, further comprising, if it is determined that the release event occurs in the first key region before occurrence of the press event in one of the second key regions after occurrence of the press event in the first key region, displaying a reference character included in the first key region where the release event occurs on the touch screen.

19. The character input method of claim 18, wherein the reference character is displayed with a different color than those of the other characters in the first key region to which the corresponding character group is assigned.

20. The character input method of claim 12, further comprising, if it is determined that the release event occurs in the first key region, moving an indicator indicating occurrence of the press event to the second key region from the first key region.

21. A character input method for use in a terminal having a touch screen, the character input method comprising:
generating a plurality of key regions by dividing a region of the touch screen;
assigning at least one character to each of the generated key regions and assigning functions for entering different specific character modes to at least one of the key regions;
determining whether a request for entering one of the specific character modes is generated; and
entering the specific character mode corresponding to the request and displaying items corresponding to the specific character mode according to a determination result.

22. The character input method of claim 21, wherein the determination comprises determining whether the duration time of a press event in the key region to which the function for entering the specific character mode is assigned in order to determine whether the request for entering the specific character mode is generated.

23. The character input method of claim 21 or 22, wherein the different specific character modes include at least two of a number input mode, an English character input mode, a Korean character input mode, a special character input mode, and a mode that provides edition items for editing an input character.

24. A character input apparatus for use in a terminal having a touch screen, the character input apparatus comprising:
a memory for storing character groups, each of which includes at least two characters displayed in each of at least two key regions generated by dividing a region of the touch screen;
a touch screen for displaying the character group in each of the key regions and generating a press event, a release event, and a drag event according to user's input to the key regions; and
a controller for assigning the character groups to the key regions and displaying the character groups in the corresponding key regions based on one-to-one correspondence, if a press event occurs in one of the key regions, enlarging and displaying characters included in the key region where the press event occurs, determining whether one of the release event and the drag event occurs in one of the key regions where the characters are displayed enlarged, indicating the key region where the drag event occurs according to distance and direction of the drag event if the drag event occurs, and
outputting characters included in the indicated key region on the touch screen if the release event occurs in the indicated key region.

25. The character input apparatus of claim 24, wherein if the release event occurs in a state where the press event occurs in one of the key regions, the controller outputs a reference character included in the key region where the press event occurs onto the touch screen.

26. The character input apparatus of claim 24 or 25, wherein the controller displays the first and second key regions in one of 2x4, 4x2, 3x4, and 4x3 block forms.

27. The character input apparatus of claim 24, wherein if the release event occurs in a state where the press event occurs, the controller enlarges and displays the characters included in the key region where the press event occurs, and if the release event occurs in a state where the press event occurs in a particular key region among key regions where the characters are displayed enlarged, the controller displays a character included in the particular key region on the touch screen.

28. A character input apparatus for use in a terminal having a touch screen, the character input apparatus comprising:
a memory for storing character groups, each of which includes at least two characters displayed in at least two first and second key regions generated by dividing a region of the touch screen;
a touch screen for generating a press event, a release event, and a drag event according to user's input to the first and second key regions; and
a controller for assigning character groups, each of which includes at least two characters, to the first key regions and displaying the character groups in the corresponding first key regions based on one-to-one correspondence, if a press event occurs in one of the first key regions, enlarging and displaying characters included in the first key region where the press event occurs in the second key regions, determining whether the release event occurs in the first key region if the press event occurs in one of the second key regions where the characters are displayed enlarged in a state where the press event occurs in the first key region, determining whether the release event occurs in the second key region where the press event occurs if the release event occurs in the first key region, and outputting a character included in the second key region onto the touch screen if the release event occurs in the second key region.

29. The character input apparatus of claim 28, wherein if the release event occurs in a state where the press event occurs in one of the first key regions, the controller outputs a reference character included in a character group assigned to the first key region where the press event occurs onto the touch screen.

30. The character input apparatus of claim 28 or 29, wherein the controller displays the first and second key regions in one of 2x4, 4x2, 3x4, and 4x3 block forms.
